# EUROPÄISCHE PATENTSCHRIFT

(11) **EP 3 554 907 B1**
(45) Veröffentlichungstag und Bekanntmachung des Hinweises auf die Patenterteilung: **04.06.2025**
(21) Anmeldenummer: 17805138.9
(22) Anmeldetag: 16.11.2017
(51) Int. Cl.: B60W 30/16, B60W 10/04, B60W 10/184, B60W 30/18

(54) **VERFAHREN ZUR SELBSTTÄTIGEN EINSTELLUNG DER GESCHWINDIGKEIT EINES MOTORRADS**
METHOD FOR AUTOMATICALLY ADJUSTING THE SPEED OF A MOTORCYCLE
PROCÉDÉ DE RÉGULATION AUTOMATIQUE DE LA VITESSE D'UNE MOTOCYCLETTE

(30) Priorität: 14.12.2016 DE 102016224913
(43) Veröffentlichungstag der Anmeldung: 23.10.2019
(73) Patentinhaber: Robert Bosch GmbH, 70442 Stuttgart (DE)
(72) Erfinder: SCHOENHERR, Michael, 71272 Renningen-Malmsheim (DE); GRELAUD, Mathieu, 70597 Stuttgart (DE)
(86) Internationale Anmeldenummer: PCT/EP2017/079463
(87) Internationale Veröffentlichungsnummer: WO 2018/108436

(56) Entgegenhaltungen:
- WO-A1-2016/021607
- WO-A1-2016/021607
- DE-T5- 112015 003 610
- DE-T5- 112015 003 610
- JP-A- 2010 070 061
- US-B1- 8 473 144
- US-B1- 8 473 144
- "Sicherheitsabstand - Wikipedia", 6 December 2016 (2016-12-06), XP055446275, Retrieved from the Internet <URL:https://de.wikipedia.org/w/index.php?title=Sicherheitsabstand&oldid=160402131> [retrieved on 20180130]
- "Sicherheitsabstand - Wikipedia", 6 December 2016 (2016-12-06), XP055446275, Retrieved from the Internet <URL:https://de.wikipedia.org/w/index.php?title=Sicherheitsabstand&oldid=160402131> [retrieved on 20180130]

## Beschreibung

Die Erfindung bezieht sich auf ein Verfahren zur selbsttätigen Einstellung der Geschwindigkeit eines Motorrads, sowie auf ein entsprechendes Steuergerät.

### Stand der Technik

Die EP 2 241 498 B1 offenbart eine Geschwindigkeitsregelvorrichtung für ein Motorrad, die es erlaubt, das Motorrad selbsttätig auf einer voreingestellten Geschwindigkeit zu halten. Derartige Geschwindigkeitsregelvorrichtungen sind auch als Tempomat bekannt.

Aus dem Kraftfahrzeugbereich sind darüber hinaus adaptive Geschwindigkeitsregelvorrichtungen bekannt, die zusätzlich mit einem radargestützten Abstandserkennungssystem ausgestattet sind, mit dessen Hilfe der Abstand zwischen dem Fahrzeug und einem vorausfahrenden Fremdfahrzeug erkannt wird. Die tatsächliche Fahrzeuggeschwindigkeit wird adaptiv in Abhängigkeit der eingestellten Sollgeschwindigkeit und in Abhängigkeit des erkannten Abstandes zum vorausfahrenden Fremdfahrzeug eingestellt.

Aus der US 8,473,144 B1 ist es bekannt, für ein Motorrad, das sich einem vorausfahrenden Fahrzeug nähert, eine Trajektorie festzulegen, entlang der sich das Motorrad bei einem Überholvorgang bewegt, wobei der Seitenabstand zwischen dem überholenden Fahrzeug und einem überholten Fremdfahrzeug geschwindigkeitsabhängig festgelegt wird.

Die DE 11 2015 003 610 T5 offenbart eine Geschwindigkeitsregelung für ein Zweirad, bei der der Längsabstand zwischen dem Zweirad und einem vorausfahrenden Fahrzeug in Abhängigkeit der Breite des Fahrzeugs festgelegt wird.

### Offenbarung der Erfindung

Das erfindungsgemäße Verfahren bezieht sich auf die selbsttätige Einstellung der Fahrgeschwindigkeit eines Motorrades unter Berücksichtigung des Längsabstandes sowie des Seitenabstandes zwischen dem Motorrad und einem in der selben Spur vorausfahrenden Fremdfahrzeug nach Anspruch 1, sowie auf ein Steuergerät nach Anspruch 7.

Hierbei wird analog zu adaptiven Geschwindigkeitsregelsystemen in Kraftfahrzeugen fortlaufend der Abstand zwischen dem Motorrad und einem Fremdfahrzeug bestimmt, wobei die tatsächliche Motorradgeschwindigkeit vom aktuellen Längsabstand sowie dem aktuellen Seitenabstand zwischen dem Motorrad und dem Fremdfahrzeug abhängt. Hierdurch wird geschwindigkeitsabhängig ein Sicherheitsabstand zwischen dem Motorrad und dem Fremdfahrzeug gewährleistet.

Bei dem erfindungsgemäßen Verfahren wird der einzuhaltende Mindestseitenabstand zwischen dem Motorrad und dem Fremdfahrzeug in Abhängigkeit des Fahrzeugtyps des Fremdfahrzeugs bestimmt. Es kann insbesondere zwischen breiteren und schmaleren Fremdfahrzeugen unterschieden werden, insbesondere zwischen Kraftfahrzeugen und Zweirädern wie zum Beispiel Motorrädern, die im Sinne der Erfindung ebenfalls als Fremdfahrzeug gelten.

Der fahrzeugtypabhängige Mindestseitenabstand ermöglicht es, eine adaptive Tempomatfunktion für ein Motorrad zu realisieren, die auf den vorausfahrenden Fahrzeugtyp angepasst ist. Es ist insbesondere möglich, zwischen Motorrädern bzw. Zweirädern einerseits und Kraftfahrzeugen wie Personenkraftwagen oder Lastkraftwagen andererseits zu differenzieren.

Diese Vorgehensweise erlaubt es beispielsweise, bei in Gruppen fahrenden Motorrädern ein adaptives Geschwindigkeitsregelsystem zu realisieren, ohne Gefahr zu laufen, dass das Motorrad sich einem vorausfahrenden Fremdmotorrad in einer gefährdenden Weise nähert und gegebenenfalls sogar ohne Fahrspurwechsel ein Überholvorgang durchgeführt wird. Derartige gefährdende Fahrsituationen können über den fahrzeugtypabhängigen

Mindestseitenabstand zwischen dem Motorrad und dem Fremdfahrzeug vermieden werden.

Es ist möglich, ein adaptives Abstandsregelsystem im Motorrad einzusetzen, das als Umfeldsensorik lediglich ein Abstandserkennungssystem zum Erkennen des Längsabstandes sowie des Seitenabstandes des Motorrads zu einem vorausfahrenden und/oder seitlich fahrenden Fremdfahrzeug aufweist, nicht jedoch ein Spurhaltesystem. Dementsprechend können ohne Sicherheitseinbußen verhältnismäßig einfach aufgebaute adaptive Motorrad-Abstandsregelsysteme realisiert werden.

Der Mindestseitenabstand ist bei schmaleren Fremdfahrzeugen größer und bei breiteren Fremdfahrzeugen kleiner. Handelt es sich bei dem vorausfahrenden Fremdfahrzeug um ein Fremdmotorrad mit einer entsprechend geringen Breite, wird ein größerer Mindestseitenabstand vorgeschrieben, der bei einem Überholvorgang eingehalten werden muss. Ist die eingestellte Motorradgeschwindigkeit größer als die Geschwindigkeit des vorausfahrenden Fremdmotorrads, nähert sich das Motorrad an, wobei ein Überholvorgang nur möglich ist, wenn der Mindestseitenabstand zwischen dem Motorrad und dem Fremdmotorrad eingehalten wird. Dieser Mindestseitenabstand bedingt üblicherweise einen Fahrspurwechsel des auffahrenden Motorrades, das mit dem Motorrad-Abstandsregelsystem ausgestattet ist. Es wird somit verhindert, dass das vorausfahrende Fremdmotorrad innerhalb der gleichen Spur von dem auffahrenden Motorrad überholt werden kann. Sofern das auffahrende Motorrad die Fahrspur nicht wechselt, wird die Motorradgeschwindigkeit selbsttätig so weit reduziert, dass der geschwindigkeitsabhängige, vorgeschriebene Mindestlängsabstand zwischen Motorrad und vorausfahrendem Fremdmotorrad eingehalten wird.

Handelt es sich dagegen bei dem vorausfahrenden Fremdfahrzeug um ein Kraftfahrzeug wie ein Personenkraftwagen oder ein Lastkraftwagen mit einer größeren Breite, so kann der Mindestseitenabstand auf einen kleineren Wert eingestellt werden, da ein Überholen des Fremdfahrzeugs ohnehin nur bei einem Fahrspurwechsel möglich ist. Indem ein kleinerer Mindestseitenabstand im Vergleich zu einem Fremdmotorrad gewählt wird, gestaltet sich der Überholvorgang des Fremdfahrzeugs flüssiger und kann in kürzerer Zeit durchgeführt werden.

Es genügt grundsätzlich, dass genau zwei verschiedene Fahrzeugtypklassen und entsprechend zwei verschiedene Mindestseitenabstände eingestellt werden können, die einerseits einem Motorrad und andererseits einem Kraftfahrzeug entsprechen. Beispielsweise kann der größere Mindestseitenabstand, welcher vorzugsweise im Fall eines vorausfahrenden Fremdmotorrads bestimmt wird, in einem Wertebereich zwischen 1.60 m und 2.50 m liegen. Bei einem vorausfahrenden Kraftfahrzeug wird dagegen vorteilhafterweise im nachfolgenden Motorrad ein kleinerer Mindestseitenabstand bestimmt, der beispielsweise in einem Wertebereich zwischen 0.80 m und 1.50 m liegt.

Es kann gegebenenfalls aber auch zweckmäßig sein, mehr als zwei verschiedene Fahrzeugtypklassen bzw. Mindestseitenabstände zu definieren, beispielsweise zwischen drei verschiedenen Fahrzeugtypklassen von Fremdfahrzeugen zu differenzieren, zum Beispiel zwischen einem Motorrad, einem Personenkraftwagen und einem Lastkraftwagen, und entsprechend die Mindestseitenabstände zu bestimmen. Des Weiteren ist es auch möglich, innerhalb eines zulässigen Wertebereichs pro Fahrzeugtyp einen größeren oder kleineren Mindestseitenabstand zu bestimmen.

Gemäß noch einer weiteren zweckmäßigen Ausführung wird der Fahrzeugtyp des Fremdfahrzeugs, welches vor dem Motorrad fährt, vom Fahrer des Motorrads selbst eingestellt. Aus dem Fahrzeugtyp kann in dem Abstandsregelsystem selbsttätig der Mindestseitenabstand bestimmt und der Einstellung der Motorradgeschwindigkeit zugrunde gelegt werden. Somit gibt der Motorradfahrer den vor ihm fahrenden Fahrzeugtyp in das Abstandsregelsystem ein. Alternativ hierzu ist es auch möglich, dass der Mindestseitenabstand vom Fahrer unmittelbar im Abstandsregelsystem ausgewählt wird, wobei vorteilhafterweise definierte Abstandsklassen hinterlegt sind, zwischen denen ausgewählt werden kann.

In einer alternativen Ausführung wird der Fahrzeugtyp des vorausfahrenden Fremdfahrzeugs selbsttätig im Abstandsregelsystem bestimmt, insbesondere mithilfe einer geeigneten Umfeldsensorik, vorzugweise über ein kamerabasiertes System, das ein Bild des vorausfahrenden Fremdfahrzeuges aufnimmt, welches in dem Abstandsregelsystem ausgewertet wird. Diese Vorgehensweise hat den Vorteil, dass keine Aktivität auf Seiten des Fahrers für die Bestimmung des Mindestseitenabstandes erforderlich ist.

Die verschiedenen Verfahrensschritte laufen in einem Steuergerät ab, das Bestandteil des Abstandsregelsystems im Motorrad ist. Das Abstandsregelsystem umfasst ein Abstandserkennungssystem, um den Längsabstand sowie den Seitenabstand zwischen dem Motorrad und dem vorausfahrenden oder seitlich fahrenden Fremdfahrzeug zu bestimmen. Im Abstandsregelsystem werden Stellsignale zur selbsttätigen Einstellung der Motorradgeschwindigkeit über eine entsprechende Ansteuerung des Motorradmotors bzw. der Motorradbremsen erzeugt.

Sofern der Fahrzeugtyp bzw. der Mindestseitenabstand vom Fahrer selbst in das Motorrad-Abstandsregelsystem eingegeben wird, verfügt dieses über eine entsprechende Eingabeeinheit, welche vom Fahrer betätigt werden kann. Bei einer selbsttätigen Erkennung des vorausfahrenden Fahrzeugtyps ist das Abstandsregelsystem mit einer entsprechenden Umfeldsensorik wie beispielsweise einem Kamerasystem ausgestattet.

Weitere Vorteile und zweckmäßige Ausführungen sind den weiteren Ansprüchen, der Figurenbeschreibung und den Zeichnungen zu entnehmen. Es zeigen:
- Fig. 1a: eine Fahrsituation eines Motorrades, das mit einem adaptiven Abstandsregelsystem ausgestattet ist, auf einer Straße mit einem vorausfahrenden Fremdmotorrad,
- Fig. 1b: eine Fig. 1a entsprechende Darstellung, jedoch mit dem Motorrad in einer anderen seitlichen Relativposition zum vorausfahrenden Fremdmotorrad,
- Fig. 2a: eine Fahrsituation eines Motorrads mit adaptivem Abstandsregelsystem und einem vorausfahrenden Fremd-Personenkraftwagen,
- Fig. 2b: eine Fig. 2a entsprechende Darstellung, jedoch mit dem Motorrad während eines Überholvorgangs auf der anderen Fahrspur.

In den Figuren sind gleiche Bauelemente und Funktionen mit gleichen Bezugszeichen versehen.

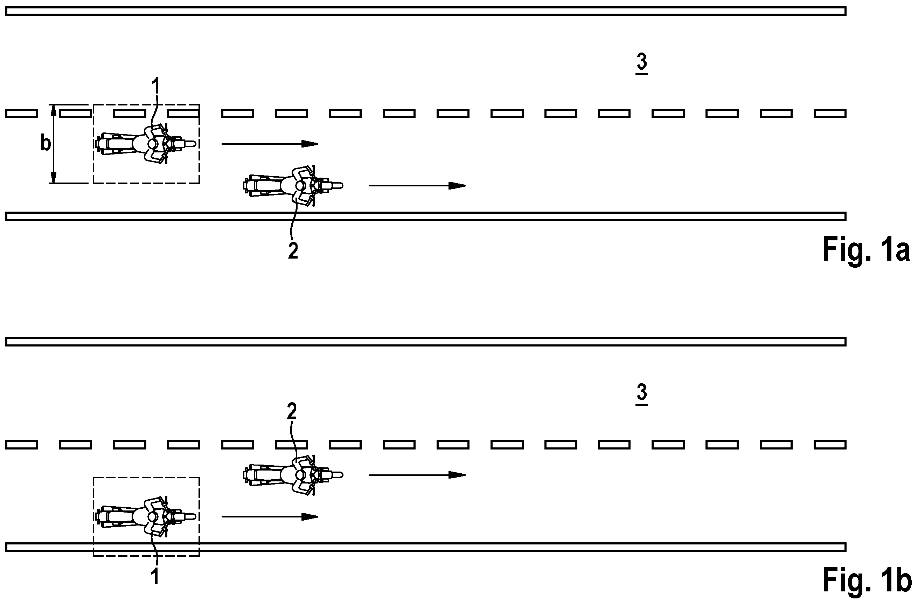

In den Fig. 1a und 1b ist ein Motorrad 1, das einem vorausfahrenden Fremdfahrzeug 2 auf einer Fahrbahn 3 folgt, dargestellt. Bei dem Fremdfahrzeug 2 handelt es sich in den Fig. 1a und 1b ebenfalls um ein Motorrad (im Folgenden:
Fremdmotorrad). Das Motorrad 1 ist mit einem adaptiven Abstandsregelsystem ausgestattet, mit dem eine eingestellte Motorradgeschwindigkeit unter Berücksichtigung des Abstandes zwischen dem Motorrad 1 und dem Fremdmotorrad 2 selbsttätig eingehalten wird. Das Abstandsregelsystem umfasst ein Abstandserkennungssystem, das insbesondere radargestützt ausgeführt ist und mit dem der Abstand zwischen dem Motorrad 1 und dem Fremdmotorrad 2 ermittelt werden kann. Das Abstandserkennungssystem im Abstandsregelsystem erlaubt es insbesondere, sowohl den Längsabstand als auch den Seitenabstand zwischen dem Motorrad 1 und dem Fremdmotorrad 2 festzustellen.

Auf der Basis des erkannten Abstandes zwischen dem Motorrad 1 und dem Fremdmotorrad 2 sowie unter Berücksichtigung der eingestellten Motorradgeschwindigkeit greift das Abstandsregelsystem im Motorrad 1 in den Motorradmotor sowie in die Motorradbremsen selbsttätig ein, um einen ausreichenden Sicherheitsabstand sowohl in Längs- als auch in Querrichtung zu dem vorausfahrenden Fremdmotorrad 2 einzuhalten.

Das Abstandsregelsystem erlaubt es, einen Mindestseitenabstand zwischen dem Motorrad 1 und dem Fremdmotorrad 2 unter Berücksichtigung des Fahrzeugtyps des Fremdfahrzeugs 2 vorzugeben und einzuhalten. Der Mindestseitenabstand des Motorrades 1 ist mit b gekennzeichnet und hängt vom Fahrzeugtyp des Fremdfahrzeugs 2 ab. Im Fall des Fremdmotorrades 2 bei Fig. 1a und 1b wird der Mindestseitenabstand b verhältnismäßig groß gewählt und liegt beispielsweise in einem Wertebereich zwischen 1.60 m und 2.50 m. Dieser verhältnismäßig große Mindestseitenabstand gewährleistet, dass im Fall eines vorausfahrenden Fremdmotorrades 2 ein Überholen bei aktiviertem Abstandsregelsystem nur möglich ist, wenn das Motorrad 1 ordnungsgemäß die Fahrspur wechselt. Dagegen ist es nicht möglich, dass das Motorrad 1 bei aktiviertem Abstandsregelsystem innerhalb der gleichen Fahrspur links (Fig. 1a) oder rechts (Fig. 1b) an dem Fremdmotorrad 2 vorbeifährt, da das Fremdmotorrad 2 noch innerhalb des Mindestseitenabstandes b des Motorrades 1 liegen würde, was von dem Abstandsregelsystem erkannt wird.

Die Geschwindigkeit des Motorrads 1 wird bei Annäherung an das vorausfahrende Fremdmotorrad 2 und dem Erreichen des Mindestlängsabstandes gedrosselt, insbesondere auf die gleiche Geschwindigkeit wie das vorausfahrende Fremdmotorrad 2, was anhand der gleich großen Geschwindigkeitspfeile in Längsrichtung am Motorrad 1 und am Fremdmotorrad 2 zu erkennen ist. Ein Überholen innerhalb der gleichen Fahrspur ist nicht möglich und kann nur für den Fall durchgeführt werden, dass das Motorrad 1 von der rechten auf die linke Fahrspur wechselt.

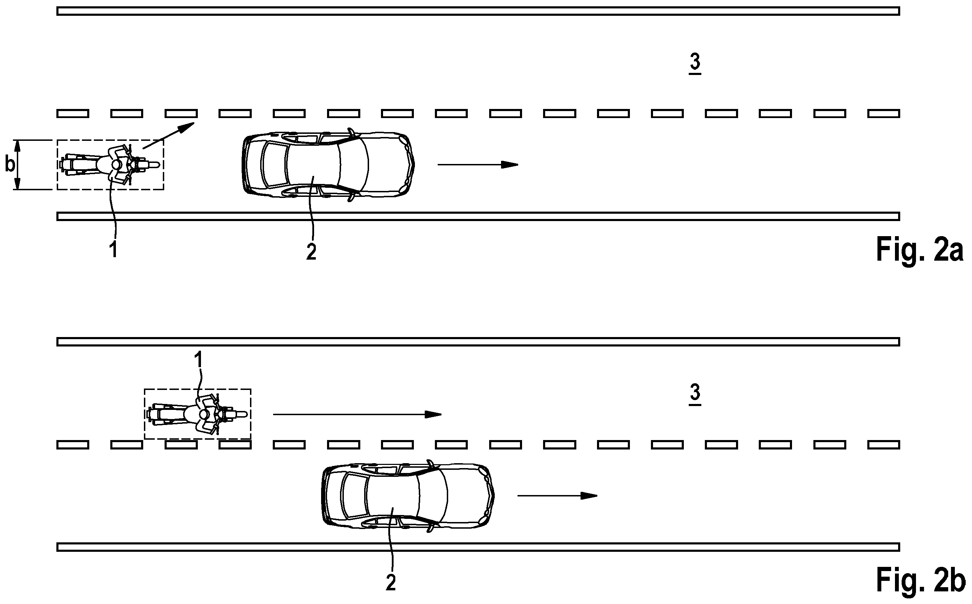

In den Fig. 2a und 2b ist eine Fahrsituation mit einem Personenkraftwagen als Fremdfahrzeug 2 dargestellt, dem das Motorrad 1 folgt. Der Mindestseitenabstand b des Motorrades 1 ist schmaler als bei Fig. 1a und 1b mit einem vorausfahrenden Fremdmotorrad. Der Grund liegt in der größeren Breite des Personenkraftwagens als Fremdfahrzeug 2 im Vergleich zu einem vorausfahrenden Fremdmotorrad. Indem der Mindestseitenabstand b des Motorrades 1 kleiner gewählt wird, beispielsweise innerhalb eines Wertebereiches zwischen 0.80 m und 1.50 m, ist ein zügiger und flüssig durchzuführender Überholvorgang möglich. Das Überholen des Fremdfahrzeuges 2 ist aufgrund der größeren Breite des Personenkraftwagens nur bei einem Ausscheren des Motorrades 1 auf die Überholspur möglich.

Vorteilhafterweise verfügt das adaptive Abstandsregelsystem über eine Eingabeeinheit, über die der Fahrer des Motorrades 1 den vorausfahrenden Fahrzeugtyp eingeben kann. Im Fall der Fig. 1a und 1b wählt der Fahrer des Motorrades 1 ein Motorrad als Fremdfahrzeug, im Fall der Fig. 2a und 2b wählt der Fahrer des Motorrades 1 ein Kraftfahrzeug als Fremdfahrzeug. Daraufhin werden selbsttätig in dem Abstandsregelsystem im Motorrad Mindestseitenabstände b als Parameter ausgewählt und der Abstandsregelung zugrunde gelegt.

## Patentansprüche

1. Verfahren zur selbsttätigen Einstellung der Geschwindigkeit eines Motorrads (1) in Abhängigkeit des Längsabstands sowie des Seitenabstands des Motorrads (1) zu einem auf einer selben Fahrspur vorausfahrenden Fremdfahrzeug (2), wobei ein einzuhaltender Mindestseitenabstand (b) zwischen dem Motorrad (1) und dem Fremdfahrzeug (2) in Abhängigkeit des Fahrzeugtyps des Fremdfahrzeugs (2) bestimmt wird, **dadurch gekennzeichnet, dass** der Mindestseitenabstand (b) bei einem Fremdmotorrad als Fremdfahrzeug (2) in der Art gewählt ist, dass ein Überholen nur möglich ist, wenn das Motorrad (1) die Fahrspur wechselt.

2. Verfahren nach Anspruch 1, **dadurch gekennzeichnet, dass** der Fahrzeugtyp des Fremdfahrzeugs (2) vom Fahrer eingestellt wird und aus dem eingestellten Fahrzeugtyp der Mindestseitenabstand (b) selbsttätig bestimmt wird.

3. Verfahren nach einem der Ansprüche 1 oder 2, **dadurch gekennzeichnet, dass** genau zwei verschiedene Fahrzeugtypklassen bzw. Mindestseitenabstände (b) bestimmt werden.

4. Verfahren nach einem der Ansprüche 1 bis 3, **dadurch gekennzeichnet, dass** als Umfeldinformationen nur der tatsächliche Längsabstand und Seitenabstand des Motorrads (1) zu dem Fremdfahrzeug (2) berücksichtigt wird.

5. Verfahren nach einem der Ansprüche 1 bis 4, **dadurch gekennzeichnet, dass** der Mindestseitenabstand (b) bei einem vorausfahrenden Kraftfahrzeug, welches nicht ein Fremdmotorrad ist, in einem Wertebereich zwischen 0.80 m und 1.50 m liegt.

6. Verfahren nach einem der Ansprüche 1 bis 5, **dadurch gekennzeichnet, dass** der Mindestseitenabstand (b) bei einem vorausfahrenden Fremdmotorrad in einem Wertebereich zwischen 1.60 m und 2.50 m liegt.

7. Steuergerät zur Durchführung des Verfahrens nach einem der Ansprüche 1 bis 6.

8. Motorrad-Abstandsregelsystem, mit einem Abstandserkennungssystem zum Erkennen des Längsabstands sowie des Seitenabstands des Motorrads (1) zu einem vorausfahrenden und/oder seitlich fahrenden Fremdfahrzeug (2) und mit einem Steuergerät nach Anspruch 7.

9. Motorrad-Abstandsregelsystem nach Anspruch 8, **dadurch gekennzeichnet, dass** im Steuergerät verschiedene Mindestseitenabstände (b) hinterlegt sind, die jeweils einem bestimmtem Fahrzeugtyp zugeordnet sind.

10. Motorrad-Abstandsregelsystem nach Anspruch 8 oder 9, **dadurch gekennzeichnet, dass** das Motorrad-Abstandsregelsystem eine Eingabeeinheit zur Eingabe eines bestimmten Fahrzeugtyps aufweist.

## Claims

1. Method for automatically setting the speed of a motorcycle (1) in accordance with the longitudinal distance and the lateral distance of the motorcycle (1) from another vehicle (2) which is travelling ahead in the same lane, wherein a minimum lateral distance (b) which is to be maintained between the motorcycle (1) and the other vehicle (2) is determined in accordance with the type of vehicle of the other vehicle (2), **characterized in that**
the minimum lateral distance (b) when the other vehicle (2) is another motorcycle is chosen such that overtaking is only possible if the motorcycle (1) changes lane.

2. Method according to Claim 1, **characterized in that** the type of vehicle of the other vehicle (2) is set by the rider and the minimum lateral distance (b) is determined automatically on the basis of the set type of vehicle.

3. Method according to either of Claims 1 and 2, **characterized in that** precisely two different type classes of vehicle or minimum lateral distances (b) are determined.

4. Method according to one of Claims 1 to 3, **characterized in that** only the actual longitudinal distance and lateral distance of the motorcycle (1) from the other vehicle (2) are taken into account as environment information.

5. Method according to one of Claims 1 to 4, **characterized in that** the minimum lateral distance (b) when the motor vehicle travelling ahead is not another motorcycle is in a value range between 0.80 m and 1.50 m.

6. Method according to one of Claims 1 to 5, **characterized in that** the minimum lateral distance (b) when another motorcycle is travelling ahead is in a value range between 1.60 m and 2.50 m.

7. Control unit for carrying out the method according to one of Claims 1 to 6.

8. Adaptive motorcycle cruise control system, having a distance detection system for detecting the longitudinal distance and the lateral distance of the motorcycle (1) from another vehicle (2) which is travelling ahead and/or which is travelling to the side, and having a control unit according to Claim 7.

9. Adaptive motorcycle cruise control system according to Claim 8, **characterized in that** various minimum lateral distances (b), which are each assigned to a specific type of vehicle, are stored in the control unit.

10. Adaptive motorcycle cruise control system according to Claim 8 or 9, **characterized in that** the adaptive motorcycle cruise control system has an input unit for inputting a specific type of vehicle.

## Revendications

1. Procédé pour régler automatiquement la vitesse d'une motocyclette (1) en fonction de la distance longitudinale et de la distance latérale entre la motocyclette (1) et un véhicule tiers (2) roulant devant elle sur la même voie de circulation, une distance latérale minimale (b) à respecter entre la motocyclette (1) et le véhicule tiers (2) étant déterminée en fonction du type de véhicule tiers (2), **caractérisé en ce que**
la distance latérale minimale (b) est, dans le cas d'une motocyclette en tant que véhicule tiers (2), choisie de telle sorte qu'un dépassement ne soit possible que si la motocyclette (1) change de voie.

2. Procédé selon la revendication 1, **caractérisé en ce que** le type de véhicule du véhicule tiers (2) est défini par le conducteur et **en ce que** la distance latérale minimale (b) est déterminée automatiquement à partir du type de véhicule défini.

3. Procédé selon l'une des revendications 1 ou 2, **caractérisé en ce que** deux classes de types de véhicules ou distances latérales minimales (b) différentes sont déterminées avec précision.

4. Procédé selon l'une des revendications 1 à 3, **caractérisé en ce que** seules la distance longitudinale et la distance latérale réelles entre la motocyclette (1) et le véhicule tiers (2) sont prises en compte en tant qu'informations d'environnement.

5. Procédé selon l'une des revendications 1 à 4, **caractérisé en ce que** la distance latérale minimale (b) par rapport à un véhicule à moteur qui précède et qui n'est pas une motocyclette tierce se situe dans une gamme de valeurs allant de 0,80 m à 1,50 m.

6. Procédé selon l'une des revendications 1 à 5, **caractérisé en ce que** la distance latérale minimale (b) par rapport à une motocyclette tierce qui précède se situe dans une gamme de valeurs allant de 1,60 m à 2,50 m.

7. Appareil de commande pour la mise en œuvre du procédé selon l'une des revendications 1 à 6.

8. Système de régulation de distance pour motocyclettes, comprenant un système de détection de distance pour détecter la distance longitudinale et la distance latérale entre la motocyclette (1) et un véhicule tiers (2) roulant devant et/ou à côté, et comprenant un appareil de commande selon la revendication 7.

9. Système de régulation de distance pour motocyclette selon la revendication 8, **caractérisé en ce que** différentes distances latérales minimales (b) sont enregistrées dans l'appareil de commande, qui sont chacune attribuées à un type de véhicule déterminé.

10. Système de régulation de distance pour motocyclette selon la revendication 8 ou la revendication 9, **caractérisé en ce que** le système de régulation de distance pour motocyclette comprend une unité de saisie pour saisir un type de véhicule déterminé.
